# EUROPEAN PATENT SPECIFICATION

(11) **EP 2 799 736 B1**
(45) Date of publication and mention of the grant of the patent: **15.08.2018**
(21) Application number: 12861103.5
(22) Date of filing: 20.12.2012
(51) Int. Cl.: F16F 9/02, F16F 9/32, F16J 15/18, F16F 9/516, F16F 9/34

(54) **AIR DAMPER**
LUFTDÄMPFER
AMORTISSEUR PNEUMATIQUE

(30) Priority: 27.12.2011 JP 2011285271
(43) Date of publication of application: 05.11.2014
(73) Proprietor: Nifco Inc., Kanagawa, 239-8560 (JP)
(72) Inventor: HAMAMOTO, Yoshiaki, Yokosuka-shi, Kanagawa, 239-8560 (JP)
(74) Representative: Dr. Gassner & Partner mbB
(86) International application number: PCT/JP2012/083102
(87) International publication number: WO 2013/099764

(56) References cited:
- EP-A1- 1 450 065
- FR-A1- 2 666 857
- JP-A- H02 150 572
- JP-A- H02 150 572
- JP-U- S5 756 356
- US-A1- 2006 011 431

## Description

### Field of Technology

The present invention relates to an air damper with the features of the preamble of claim 1 or 2, with a type including orifices formed especially by a housing groove provided around a piston, an O-ring fitted in the housing groove, a ventilation groove communicated with a rear chamber or a front chamber from a groove bottom face of the housing groove, and the like among air dampers.

### Background Art

A conventional damper is disclosed in FR 2 666 857 A1.

The air damper is the same as a rotary damper in that, for example, the air damper brakes a moving speed of a second member relative to a first member; however, as compared to the rotary damper, the air damper does not require a gear and the like so as to facilitate assembly of the air damper. Figs. 7(a) and 7(b) show an air damper disclosed in Patent Document 1 as one example thereof. Fig. 7(a) shows a usage example of the air damper, and Fig. 7(b) shows a structure of the air damper. The air damper D comprises a cylinder 11 with an attachment piece 18; a piston 31 disposed inside the cylinder movably forward and backward, and a rod 41 with an attachment portion 42 moving in association with the piston. The attachment piece 18 includes a fitting hole 19. The attachment portion 42 is a clamp opening one portion of a hole. Then, in the air damper D, the cylinder 11 is supported by an axis of a screw, a bolt, or the like which is not shown in the drawings at a disposed portion on a panel side through the fitting hole 19, and the rod 41 is supported by an axis of a protrusion, a bolt, or the like which is not shown in the drawings at a disposed portion on a glove compartment G side through the attachment portion 42. Thereby, in the glove compartment G, from a state of being locked in a closed position by a lock device, when the glove compartment G is unlocked by a push operation of an operation button B so as to be switched to an open position by its own weight, the glove compartment G is slowly turned while being damped by the air damper D.

In the aforementioned air damper D, the piston 31 forms first orifices (32, 35, 51) and a second orifice 37. The first orifices include a housing groove 32 provided around an outer periphery of the piston; an O-ring 51 fitted in the housing groove 32 and dividing an inside of the cylinder into a front chamber and a rear chamber; and ventilation grooves 35 communicating with the rear chamber from a groove bottom face of the housing groove 32. In this example, when the piston 31 moves backward inside the cylinder 11, accompanied by a forward movement of the O-ring 51 inside the housing groove 32, an airflow flowing from the rear chamber to the front chamber is reduced. Also, when the piston 31 moves forward inside the cylinder 11, accompanied by a backward movement of the O-ring 51 inside the housing groove 32, the airflow flowing from the front chamber to the rear chamber is increased through the ventilation grooves 35. On the other hand, the second orifice 37 is a through-hole penetrated in an axis direction and narrowed more than effective cross-sectional areas of the first orifices or the ventilation grooves 35, and when the piston 31 moves forward and backward inside the cylinder 11, the airflow flowing from either the front chamber or the rear chamber to the other front chamber or rear chamber is reduced according to a hole diameter so as to allow the piston 31 to attain a predetermined braking force.

### Prior Art Document

### Patent Document

Patent Document 1: Japanese Unexamined Patent Publication JP 2005240824 A

### Summary of the Invention

### Problems to be Solved by the Invention

In a damper structure described hereinabove, the O-ring 51 is relatively moved inside the housing groove 32 when the piston 31 moves in the axis direction inside the cylinder 11; however, at that time, the O-ring 51 can be easily twisted partially, and when the O-ring is twisted in that manner, an outer diameter of the ring becomes smaller than an intended outer diameter, so that a normal braking action cannot be maintained. As a countermeasure against the above, in the O-ring 51, portions (portions separated from ventilation grooves) which do not have an effect on a braking action inside the housing groove 32 are sandwiched between protrusion wall portions (fixed portions) which are not shown in the drawings and provided inside the housing groove and a front flange portion 33 to be fixed, so that a ring portion between the fixed portions moves excellently associated with forward and backward movements of the piston as a supporting point of a fixed portion, and thereby prevents twisting of the O-ring 51.

However, although the aforementioned countermeasure is reasonably effective in preventing the twisting of the O-ring, it is understood that since a protrusion wall portion is formed inside the housing groove as the fixed portion, a forming die becomes complicated, or, for example, as the O-ring is reduced in size, it becomes difficult to attain an improvement effect in accordance with a design.

The present invention is devised from a background described hereinabove. An object of the present invention is to allow a movement of the O-ring accompanied by a movement of the piston to be stable and excellent while maintaining simplicity, and thereby prevent the twisting of the O-ring and maintain an initial damping effect for long periods so as to improve a quality and reliability in an air damper with the type including the orifices formed by the housing groove provided around the piston, the O-ring fitted in the housing groove, the ventilation groove communicated with the rear chamber or the front chamber from the groove bottom face of the housing groove, and the like among the air dampers.

### Means for Solving the Problems

This problem is solved by an air damper with the features of claim 1.

An air damper according to the first aspect of the present invention relates to a type wherein a damping effect increases when a rod on a piston side is pulled or moves backward, and comprises a piston disposed inside a cylinder movably forward and backward; a housing groove provided at a periphery of the piston; an O-ring fitted in the housing groove, and dividing an inside of the cylinder into a front chamber and a rear chamber; and a ventilation groove communicating with the rear chamber from a groove bottom face of the housing groove. In the air damper, when the cylinder moves backward, an airflow flowing from the rear chamber to the front chamber accompanied by a forward movement of the O-ring inside the housing groove is reduced, and when the cylinder moves forward, an airflow flowing from the front chamber to the rear chamber accompanied by a backward movement of the O-ring inside the housing groove is increased through the ventilation groove. The housing groove is partitioned by the groove bottom face and front and back flange portions facing each other by sandwiching the groove bottom face. Also, three or more ventilation grooves are provided at portions dividing the groove bottom face of the housing groove and a periphery of the back flange portion into approximately equal parts, wherein the ventilation groove has a width size in a peripheral direction of the housing groove such that a width L2 on an upper side is formed longer than a width L1 on a lower side.

The problem on which the invention is based is also solved by an air damper with the features of claim 2.

The air damper according to a second aspect of the present invention relates to a type wherein the damping effect increases when the rod on the piston side is pressed or moves forward, and comprises the piston disposed inside the cylinder movably forward and backward; the housing groove provided at the periphery of the piston; the O-ring fitted in the housing groove, and dividing the inside of the cylinder into the front chamber and the rear chamber; and the ventilation groove communicating with the front chamber from the groove bottom face of the housing groove. In the air damper, when the cylinder moves forward, the airflow flowing from the front chamber to the rear chamber accompanied by the backward movement of the O-ring inside the housing groove is reduced, and when the cylinder moves backward, the airflow flowing from the rear chamber to the front chamber accompanied by the forward movement of the O-ring inside the housing groove is increased through the ventilation groove. The housing groove is partitioned by the groove bottom face and the front and back flange portions facing each other by sandwiching the groove bottom face. Also, three or more ventilation grooves are provided at portions dividing the groove bottom face of the housing groove and a periphery of the front flange portion into approximately equal parts, wherein the ventilation groove has a width size in a peripheral direction of the housing groove such that a width L2 on an upper side is formed longer than a width L1 on a lower side.

Also, preferably, the ventilation groove becomes a hollow having an approximately fan shape in a cross section in a housing groove peripheral direction thereof. According to this preferred aspect, a groove bottom face portion of the housing groove which contacts with the O-ring becomes efficiently hollow, and thereby becomes more suitable as a countermeasure against twisting of the O-ring.

Additionally, more preferably, the ventilation groove forms an inside face partitioning a groove space in an inclined shape or an arc shape. According to this preferred aspect, in the groove bottom face of the housing groove with which the O-ring contacts, a local resistance receiving from a groove edge portion corresponding to the ventilation groove is eliminated as much as possible, and thereby maintains a smooth movement of the O-ring more reliably so as to become a more suitable countermeasure against the twisting.

### Effect of the Invention

In the air damper according to the first aspect of the present invention, in the type wherein the damping effect increases when the rod on the piston side is pulled or moves backward, the countermeasure against the twisting of the aforementioned O-ring can be easily carried out as compared to a conventional countermeasure. Also, the air damper according to the first aspect of the present invention prevents the twisting of the O-ring, and maintains an initial damping effect so as to improve a quality and reliability. This is a structure completed by the following test result. Namely, in a conventional structure, if the ventilation groove is provided at two portions dividing a periphery of the groove bottom face of the housing groove and the like into approximately equal parts, or if two or more ventilation grooves are provided at the periphery unevenly, the O-ring receives the local resistance when the O-ring moves accompanied by the movement of the piston so as to become difficult to maintain a stable movement. On the other hand, in the present invention, if three or more ventilation grooves are provided at the portions dividing the groove bottom face of the housing groove and the periphery of the back flange portion into approximately equal parts, as compared to the conventional structure, a resistance produced by the movement of the O-ring becomes uniform and well-balanced, and the resistance is reduced or dispersed. As a result, the twisting of the O-ring is prevented so as to maintain the initial damping effect for long periods.

In the air damper according to the second aspect of the present invention, in the type wherein the damping effect increases when the rod on the piston side is pressed or moves forward, as for the countermeasure against the twisting of the aforementioned O-ring, by a test result similar to that of the air damper according to the first aspect of the present invention, the countermeasure against the twisting of the aforementioned O-ring can be easily carried out as compared to the conventional countermeasure. Also, the air damper according to the second aspect of the present invention maintains the initial damping effect so as to improve the quality and reliability.

### Brief Description of the Drawings

Figs. 1(a) to 1(c) show an air damper of an embodiment of the present invention, wherein Fig. 1(a) is a front view; Fig. 1(b) is a right end view; and Fig. 1(c) is a bottom view.
Fig. 2(a) is a cross-sectional view taken along a line A-A in Fig. 1(a); Fig. 2(b) is an operational view of essential parts when a piston is moved backward; and Fig. 2(c) is an operational view of the essential parts when the piston is moved forward.
Fig. 3 is an outside view showing a single piston of the aforementioned air damper.
Figs. 4(a) to 4(d) show the piston, wherein Fig. 4(a) is a front view; Fig. 4(b) is a cross-sectional view taken along a line B-B in Fig. 4(a); Fig. 4(c) is a left end view; and Fig. 4(d) is a cross-sectional view taken along a line C-C in Fig. 4(a).
Figs. 5(a) and 5(b) show a modified example 1 of the piston, wherein Fig. 5(a) is an outside view; and Fig. 5(b) is a cross-sectional view corresponding to Fig. 4(d).
Figs. 6(a) to 6(c) show a modified example 2 of the piston, and the air damper using the same, and correspond to Figs. 2(a) to 2(c), wherein Fig. 6(a) is a cross-sectional view; Fig. 6(b) is an operational view of the essential parts when the piston is moved backward; and Fig. 6(c) is an operational view of the essential parts when the piston is moved forward.
Figs. 7(a) and 7(b) are an air damper disclosed in Patent Document 1, wherein Fig. 7(a) shows a usage example; and Fig. 7(b) shows a damper structure.

### Best Modes of Carrying out the Invention

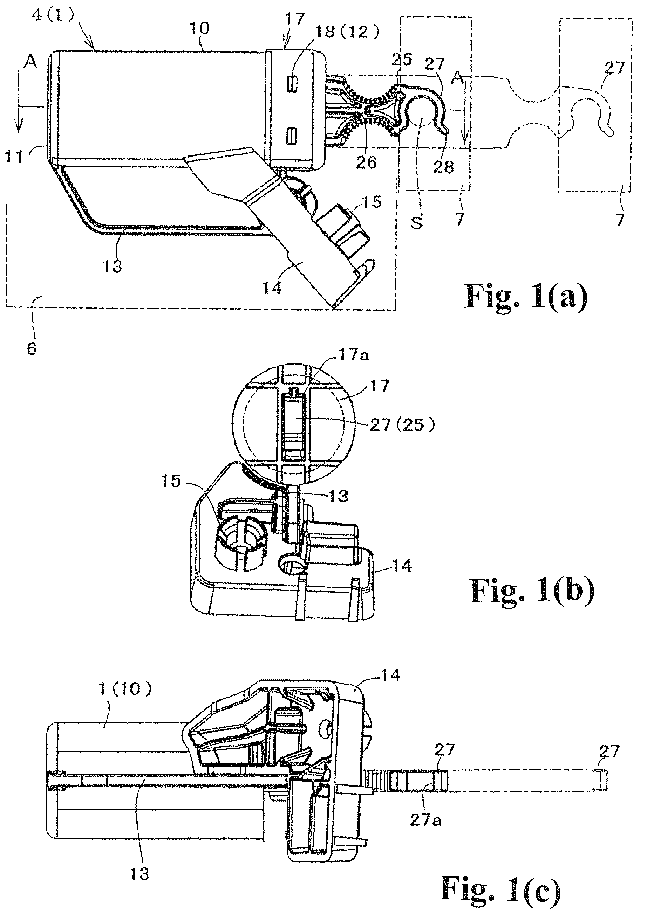

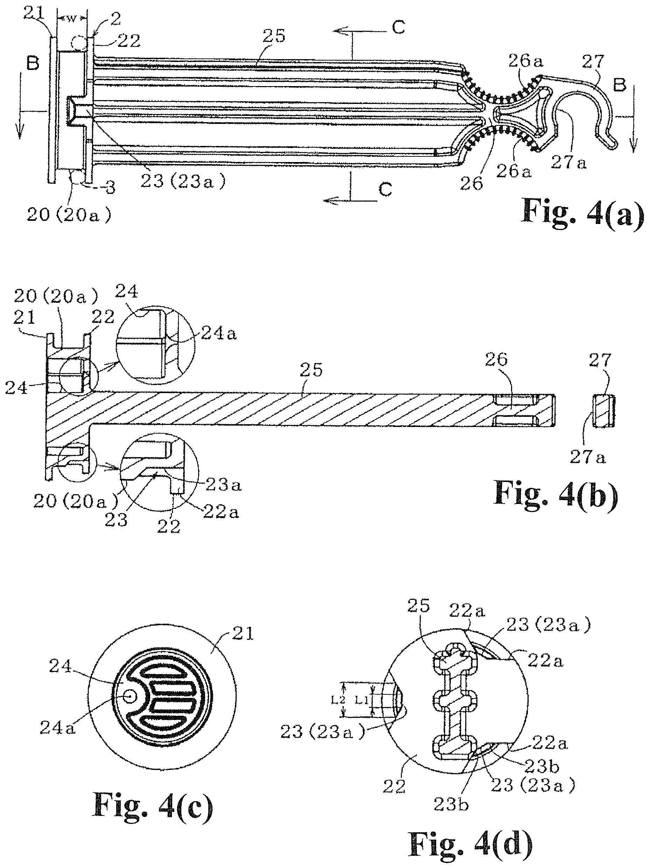

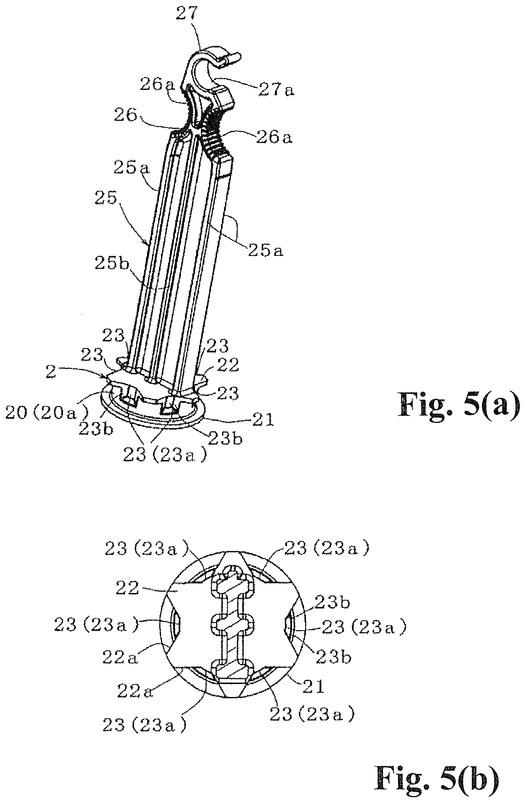

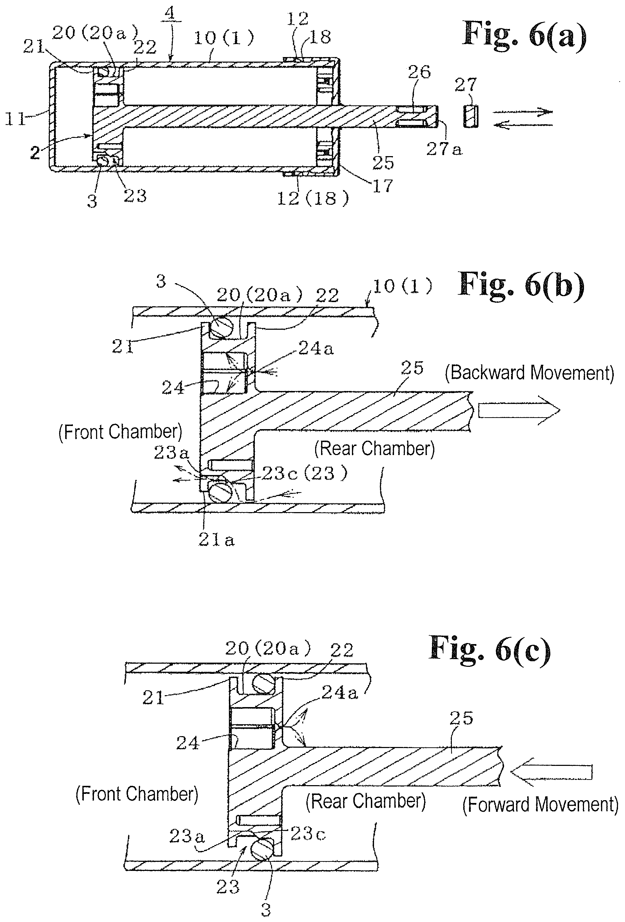

Hereinafter, embodiments of the present invention will be explained with reference to the drawings. In this explanation, a structure and an operation of an air damper shown in Figs. 1(a) to 4(d), a modified example 1 shown in Figs. 5(a) and 5(b), and a modified example 2 shown in Figs. 6(a) to 6(c) will be explained in detail in that order.

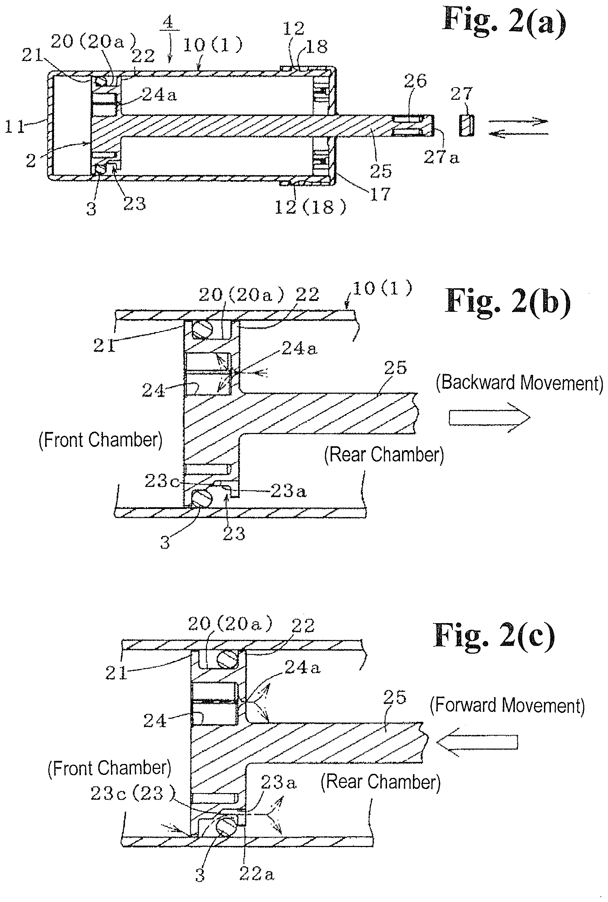

(Structure) As shown in Figs. 2(a) to 2(c), an air damper 4 of the embodiment is formed by a cylinder 1 having a bottom; a piston 2 disposed inside the cylinder 1 reciprocally or movably forward and backward; an O-ring 3 incorporated in the piston 2; a rod 25 moving in associating with the piston 2; and a cap 17 mounted on one end side of the cylinder 1.

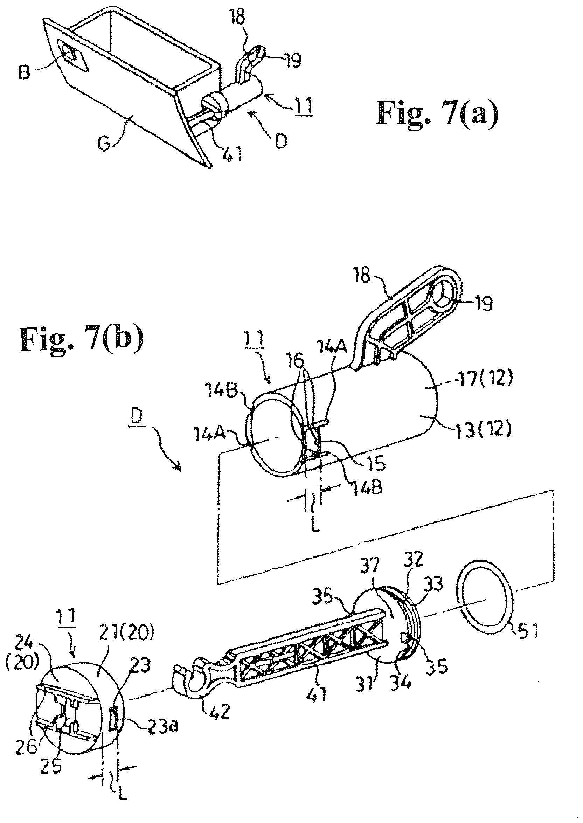

As for a usage, although a glove compartment such as Fig. 7(a) is assumed, it may be used for another usage. As for materials, the cylinder 1, the piston 2, the rod 25, and the cap 17 are resin molded articles; however, they may be formed by materials other than resin.

First, as shown in Figs. 1(a) to 1(c), and Figs. 2(a) to 2(c), the cylinder 1 is formed by a cylinder body 10 having the cylindrical bottom closing a front end face 11, and integrally includes a plurality of locking claws 12 projected around an opening side of the cylinder body 10; a plate-like holding portion 13 projecting on an outer peripheral wall, and extending to front and back; a pedestal-like attachment portion 14 projecting obliquely downward from a front side periphery; a guide portion 15 protruding from an upper face side of the attachment portion 14 and allowing an attachment tool such as a screw and the like to pass through; and the like. Obviously, the holding portion 13 or the attachment portion 14 is deformed in an optimal shape according to an intended usage and an installation portion.

An opening on one end side of the cylinder body 10 is closed by the cap 17. The cap 17 includes an insertion hole 17a having an approximately rectangular shape for inserting the rod provided at a center portion to pass through; and a plurality of engagement holes 18 provided at a periphery portion. Then, when the aforementioned cap 17 is fitted in one end side of the cylinder body 10 from a state wherein the piston 2 and the rod 25 are incorporated inside the cylinder 1, each locking claw 12 on a cylinder side locks in the corresponding engagement hole 18. Thereby, the cap 17 is integrally mounted relative to the cylinder 1.

As shown in Figs. 2(a) to 4(d), the piston 2 has an approximately discoid shape, is slidably disposed inside the cylinder body 10 of the cylinder, and includes the rod 25 protruding from a back side end face. In the piston 2, there are provided a housing groove 20 around an outer periphery and having an approximately concave shape in a cross section; a ventilation groove 23 communicating with a rear chamber from a groove bottom face 20a of the housing groove 20; and a second orifice 24a located on an inner diameter side more than the housing groove 20, and passing through in an axis direction. Incidentally, this piston 2 is one example of a one-way type, wherein a damping effect increases when the rod 25 on a piston side is pulled or moves backward.

The housing groove 20 is partitioned by a front flange portion 21, a back flange portion 22, and the groove bottom face 20a, or by the front and back flange portions 21, 22 facing each other by sandwiching the groove bottom face 20a. A groove width w of the housing groove 20 is set in a width size wherein a size of the housing groove 20 and the like are taken into account as a moving distance in the axis direction of the O-ring 3. The O-ring 3 is fitted into the housing groove 20 with an appropriate elasticity and movably in the axis direction, and as shown in Figs. 2(a) to 2(c), the O-ring 3 divides the inside of the cylinder body 10 of the cylinder into a front chamber and the rear chamber.

The ventilation groove 23 is a ventilation hole for attaining a one-way effect which prevents a damper (damping) effect when a first orifice, i.e., the piston 2 moves in one direction together with the O-ring 3. Consequently, the ventilation groove 23 is set to have a large effective cross-sectional area as compared to the second orifice 24a. The second orifice 24a is a ventilation hole in the axis direction communicating with a concave portion 24 provided from a front end face side toward a back end face side of the piston 2. Also, the ventilation groove 23 is a groove in which the groove bottom face 20a and a corresponding portion 22a of the back flange portion 22 are notched, and in a structure with three ventilation grooves 23 as shown in this example, the ventilation grooves 23 are provided at portions nearly dividing the groove bottom face 20a and a periphery of the back flange portion 22 into nearly equal parts, i.e., at approximately 120-degree intervals.

Also, as shown in Fig. 4(d), the respective ventilation groove 23 has a width size in a peripheral direction of the housing groove 20 such that a width L2 on an upper side is formed longer than a width L1 on a lower side. Also, the ventilation groove 23 becomes a hollow having an approximately fan shape in a cross section in the housing groove peripheral direction thereof.

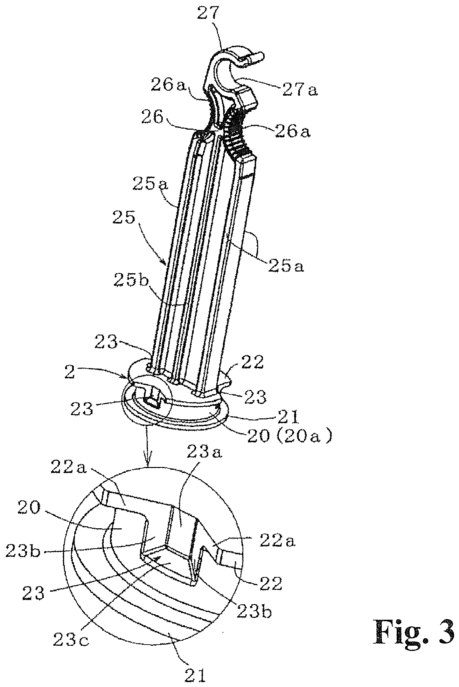

Additionally, as shown in an enlarged view in Fig. 3, in the respective ventilation groove 23, a groove bottom face 23a partitioning a groove space has an approximately rectangular shape, and inside faces standing up from the groove bottom face 23a, i.e., inside faces 23b and 23b facing each other in the peripheral direction, and an inside face 23c on a groove back side are formed in an inclined shape or an arc shape. In this regard, it is also made such that the O-ring 3 is located inside the housing groove 20 to become difficult to fall into the ventilation groove 23 from the groove bottom face 20a to some extent, and to eliminate a local resistance receiving from a groove edge portion of the ventilation groove 23 as much as possible so as to eliminate twisting of the O-ring 3 caused by the aforementioned local resistance and the like, and to maintain an excellent movement.

On the other hand, as shown in Fig. 3, the rod 25 is projected on a back end face of the piston 2, has a slender plate shape, and is reinforced by ribs 25a provided in respective edge portions in a longitudinal direction of the plate and serving as edging; and an intermediate rib 25b provided between the ribs 25a on both sides. An end side is a portion always disposed outside the cylinder 1, and includes a neck portion 26 located between arc-like portions 26a on both sides; and a clamp portion 27 with an opening 27a connected to the neck portion 26.

(Operation) Next, a main operation of the aforementioned air damper 4 will be explained.

First, for example, as shown in Fig. 1(a) schematically, the air damper 4 is disposed between a first member 6 and a second member 7, and brakes a moving speed of the second member 7 on a movable side. There, the cylinder 1 is attached to a disposed portion of the first member 6, and the rod 25 is attached to a disposed portion of the second member 7. Incidentally, the rod 25 is turnably pivoted or non-turnably fixed by the fitting between the clamp portion 27 and a shaft S of a boss, a bolt, a screw, or the like. On the other hand, the cylinder 1 is positioned and disposed on another side through the holding portion 13, and is fixed by the screw, the bolt, or the like passing through the guide portion 15 of the attachment portion 14 and the like.
(1) In the air damper 4, in a process wherein the rod 25 (the piston 2) moves in a direction of protruding from the cylinder 1 or backward, as shown in Fig. 2(b), the O-ring 3 moves forward within a groove width of the housing groove 20 so as to block a pathway formed between the respective ventilation groove 23 and the front chamber. Consequently, as for the piston 2, air in the rear chamber flows relative to the front chamber entirely through the second orifice 24a, and does not flow from the ventilation groove 23. As a result, the rod 25 is damped so as to be slowly moved backward.
(2) In a process wherein the piston 2 is entered with respect to the cylinder 1 or moves forward, as shown in Fig. 2(c), the O-ring 3 moves backward until the O-ring 3 hits the aforementioned back flange portion 22 within the groove width of the housing groove 20 so as to open the pathway formed between the respective ventilation groove 23 and the front chamber. Consequently, as for the piston 2, air in the front chamber flows relative to the rear chamber through the second orifice 24a, the respective ventilation groove 23, the housing groove 20, and a gap between the front flange portion 21 and a cylinder inner face, i.e., the first orifice. As a result, the rod 25 is moved forward without being damped.
(3) As for a specific example, in the case of a usage example such that the second member 7 in Fig. 1(a) is switched between an open position or a separated position separated from the first member 6, and a closed position or an abutment position approaching the first member 6, in a process wherein the second member 7 is switched from the abutment position to the separated position, the second member 7 receives a braking force of the air damper 4 and is slowly moved; however, in a process wherein the second member 7 is switched from the separated position to the abutment position, the second member 7 does not receive the braking force of the air damper 4. In the aforementioned basic operation, in this structure, first, three or more ventilation grooves 23 are provided at portions dividing a groove periphery into equal parts so as to reduce a local resistance in a balanced manner at a moving time in the axis direction of the O-ring 3, to eliminate the twisting of the O-ring 3 caused by the local resistance and the like, and to maintain the excellent movement for long periods. Also, a shape of the groove width in the aforementioned respective ventilation groove 23 and shapes of the groove inside faces are made so as to maintain the excellent movement of the O-ring 3. As a result, the twisting of the O-ring 3 caused by the aforementioned local resistance and the like is eliminated so as to maintain a stable braking force for long periods.

(Modified example 1) Figs. 5(a) and 5(b) show one example in which the number of the ventilation grooves 23 provided on the piston 2 is modified. In this explanation, the same symbols are assigned to the same or similar portions as the aforementioned embodiment, and only main modifications will be described.

In the piston 2, there are provided six ventilation grooves 23 for the first orifice communicating with the rear chamber from the groove bottom face 20a of the housing groove 20 at approximately 60-degree intervals. Namely, in the present invention, as can be seen from the modified example, as for the ventilation groove 23 in which the groove bottom face 20a and a corresponding portion of the front flange portion 21 are notched, the ventilation groove 23 is not limited to three as shown in the aforementioned embodiment. In a structure with four ventilation grooves 23, the ventilation grooves 23 are provided at approximately 90-degree intervals; in a structure with five ventilation grooves 23, the ventilation grooves 23 are provided at approximately 72-degree intervals; in a structure with seven ventilation grooves 23, the ventilation grooves 23 are provided at approximately 51-degree intervals; in a structure with eight ventilation grooves 23, the ventilation grooves 23 are provided at approximately 45-degree intervals; in a structure with nine ventilation grooves 23, the ventilation grooves 23 are provided at approximately 40-degree intervals; and in a structure with ten ventilation grooves 23, the ventilation grooves 23 are provided at approximately 36-degree intervals. Thus, as the number of the ventilation grooves 23 increases, the groove width becomes relatively smaller as well. The number of the ventilation grooves 23 may be any number as long as the number is three or more, and the upper limit of the number of the ventilation grooves 23 is restricted by workability and the like.

(Modified example 2) As for the piston 2, Figs. 6(a) to 6(c) are one example in which the damping effect increases when the rod on the piston side is pressed or moves forward. In this explanation, the same symbols are also assigned to the same or similar portions as the aforementioned embodiment, and modifications will be described.

In the piston 2, each ventilation groove 23 is the groove in which the groove bottom face 20a and the corresponding portion of the front flange portion 21 are notched, and the ventilation grooves 23 are provided at the portions nearly dividing the groove bottom face 20a and the periphery of the back flange portion 22 into nearly equal parts, and in this example, at approximately 120-degree intervals. Incidentally, each ventilation groove 23 is the same as that of the aforementioned embodiment in the following respects. The ventilation groove 23 has the width size in the peripheral direction of the housing groove 20 such that the width on the upper side is formed longer than the width on the lower side, and the ventilation groove 23 becomes hollow having approximately the fan shape in the cross section in the housing groove peripheral direction thereof. Also, the inside faces partitioning the groove space, i.e., the inside faces 23b and 23b facing each other in the peripheral direction, and the inside face 23c on the groove back side are formed in the inclined shape or the arc shape.
(1) In the air damper 4, in the process wherein the rod 25 (the piston 2) moves in the direction of protruding from the cylinder 1 or backward, as shown in Fig. 6(b), the O-ring 3 moves forward within the groove width of the housing groove 20 until the O-ring 3 hits the front flange portion 21 so as to open the pathway formed between the respective ventilation groove 23 and the front chamber. Consequently, as for the piston 2, air in the rear chamber flows relative to the front chamber through the second orifice 24a, the respective ventilation groove 23, the housing groove 20, and a gap between the back flange portion 22 and the cylinder inner face, i.e., the first orifice. As a result, the rod 25 is moved backward without being damped.
(2) In the process wherein the piston 2 is entered with respect to the cylinder 1 or moves forward, as shown in Fig. 6(c), the O-ring 3 moves backward within the groove width of the housing groove 20 so as to close the pathway formed between the respective ventilation groove 23 and the rear chamber. Consequently, as for the piston 2, air in the front chamber flows relative to the rear chamber entirely through the second orifice 24a, and does not flow from the ventilation groove 23. As a result, the rod 25 is damped so as to be slowly moved frontward.

Incidentally, the present invention is not limited to the embodiment or the modified examples 1 and 2 described hereinabove, and details can be variously modified or expanded provided that they are provided with technical elements specified in the subject of the present invention. As one example thereof, regarding the structure of the cylinder or the rod, other heretofore known structures may be used.

## Claims

1. An air damper (4), comprising:
a piston (2) disposed inside a cylinder (1) movably forward and backward;
a housing groove (20) provided at a periphery of the piston (2);
an O-ring (3) fitted in the housing groove (20), and dividing an inside of the cylinder (1) into a front chamber and a rear chamber; and
a ventilation groove (23) communicating with the rear chamber from a groove bottom face (20a) of the housing groove (20),
wherein when the cylinder (1) moves backward, an airflow flowing from the rear chamber to the front chamber accompanied by a forward movement of the O-ring (3) inside the housing groove (20) is reduced, and when the cylinder (1) moves forward, an airflow flowing from the front chamber to the rear chamber accompanied by a backward movement of the O-ring (3) inside the housing groove (20) is increased through the ventilation groove (23),
wherein the housing groove (20) is partitioned by the groove bottom face (20a) and front and back flange portions (21, 22) facing each other by sandwiching the groove bottom face (20a), and
three or more ventilation grooves (23) are provided at portions dividing the groove bottom face (20a) of the housing groove (20) and a periphery of the back flange portion (22) into approximately equal parts,
**characterized in that**
the ventilation groove (23) has a width size in a peripheral direction of the housing groove (20) such that a width (L2) on an upper side is formed longer than a width (L1) on a lower side.

2. An air damper (4), comprising:
a piston (2) disposed inside a cylinder (1) movably forward and backward;
a housing groove (20) provided at a periphery of the piston (2);
an O-ring (3) fitted in the housing groove (20), and dividing an inside of the cylinder (1) into a front chamber and a rear chamber; and
a ventilation groove (23) communicating with the front chamber from a groove bottom face (20a) of the housing groove (20),
wherein when the cylinder (1) moves forward, an airflow flowing from the front chamber to the rear chamber accompanied by a backward movement of the O-ring (3) inside the housing groove (20) is reduced, and when the cylinder (1) moves backward, an airflow flowing from the rear chamber to the front chamber accompanied by a forward movement of the O-ring (3) inside the housing groove (20) is increased through the ventilation groove (23),
wherein the housing groove (20) is partitioned by the groove bottom face (20a) and front and back flange portions (21, 22) facing each other by sandwiching the groove bottom face (20a), and
three or more ventilation grooves (23) are provided at portions dividing the groove bottom face (20a) of the housing groove (20) and a periphery of the front flange portion (21) into approximately equal parts,
**characterized in that**
the ventilation groove (23) has a width size in a peripheral direction of the housing groove (20) such that a width (L2) on an upper side is formed longer than a width (L1) on a lower side.

3. An air damper (4) according to claim 1 or 2, wherein the ventilation groove (23) is hollow with an approximately fan shape in a cross section in a housing groove peripheral direction thereof.

4. An air damper (4) according to any one of claims 1 to 3, wherein the ventilation groove (23) forms an inside face partitioning a groove space in an inclined shape or an arc shape.

5. An air damper (4) according to claims 1 to 4, wherein in the respective ventilation groove (23), a groove bottom face (23a) partitioning a groove space has an approximately rectangular shape, and inside faces (23b) standing up from the groove bottom face (23a) and facing each other in the peripheral direction, and an inside face (23c) on a groove back side are formed in an inclined shape.

## Patentansprüche

1. Luftdämpfer (4), Folgendes aufweisend:
einen Kolben (2), der im Inneren eines Zylinders (1) hin und her beweglich angeordnet ist;
eine am Umfang des Kolbens (2) angeordnete Gehäusenut (20);
einen in die Gehäusenut (20) eingepassten und das Innere des Zylinders (1) in eine vordere Kammer und eine hintere Kammer teilenden O-Ring (3); und
eine von einer Nut-Bodenfläche (20a) der Gehäusenut (20) mit der hinteren Kammer verbundene Lüftungsnut (23),
wobei, wenn sich der Zylinder (1) nach hinten bewegt, ein Luftstrom, der begleitet von einer Vorwärtsbewegung des O-Rings (3) in der Gehäusenut (20) von der hinteren Kammer zur vorderen Kammer strömt, reduziert wird, und wenn sich der Zylinder (1) nach vorne bewegt, ein Luftstrom, der begleitet von einer Rückwärtsbewegung des O-Rings (3) in der Gehäusenut (20) von der vorderen Kammer zur hinteren Kammer strömt, durch die Lüftungsnut (23) verstärkt wird,
wobei die Gehäusenut (20) durch die Nut-Bodenfläche (20a) und vorderen und hinteren einander zugewandten Flanschabschnitte (21, 22) durch Dazwischenlegen der Nut-Bodenfläche (20a) unterteilt ist, und
drei oder mehr Lüftungsnuten (23) an Abschnitten bereitgestellt sind, die die Nut-Bodenfläche (20a) der Gehäusenut (20) und den Umfang des hinteren Flanschabschnitts (22) in ungefähr gleiche Teile teilen,
**dadurch gekennzeichnet, dass**
die Lüftungsnut (23) eine Breitenabmessung in Umfangsrichtung der Gehäusenut (20) aufweist, derart, dass eine Breite (L2) auf der Oberseite größer ist als eine Breite (L1) auf der Unterseite.

2. Luftdämpfer (4), aufweisend:
einen im Inneren eines Zylinders (1) hin und her beweglich angeordneten Kolben (2);
eine auf dem Umfang des Kolbens (2) angeordnete Gehäusenut (20);
einen in die Gehäusenut (20) eingepassten und ein Inneres des Zylinders (1) in eine vordere Kammer und eine hintere Kammer teilenden O-Ring (3); und
eine mit der vorderen Kammer von einer Nut-Bodenfläche (20a) der Gehäusenut (20) aus kommunizierende Lüftungsnut (23),
wobei, wenn sich der Zylinder (1) nach vorne bewegt, ein Luftstrom, der begleitet von einer Rückwärtsbewegung des O-Rings (3) in der Gehäusenut (20) von der vorderen Kammer zur hinteren Kammer strömt, reduziert wird, und wenn sich der Zylinder (1) nach hinten bewegt, ein Luftstrom, der begleitet von einer Vorwärtsbewegung des O-Rings (3) in der Gehäusenut (20) von der hinteren Kammer zur vorderen Kammer strömt, durch die Lüftungsnut (23) verstärkt wird,
wobei die Gehäusenut (20) durch die Nut-Bodenfläche (20a) und die einander zugewandten vorderen und hinteren Flanschabschnitte (21, 22) durch Dazwischenlegen der Nut-Bodenfläche (20a) unterteilt ist, und
drei oder mehr Lüftungsnuten (23) an Abschnitten bereitgestellt sind, die die Nut-Bodenfläche (20a) der Gehäusenut (20) und den Umfang des vorderen Flanschabschnitts (21) in ungefähr gleiche Teile teilen,
**dadurch gekennzeichnet, dass**
die Lüftungsnut (23) eine Breitenabmessung in Umfangsrichtung der Gehäusenut (20) aufweist, derart, dass eine Breite (L2) auf der Oberseite größer ist als eine Breite (L1) auf der Unterseite.

3. Luftdämpfer (4) nach Anspruch 1 oder 2, wobei die Lüftungsnut (23) hohl ist und in einem Querschnittsabschnitt in Gehäusenut-Umfangsrichtung näherungsweise fächerförmig ausgebildet ist.

4. Luftdämpfer (4) nach einem der Ansprüche 1 bis 3, wobei die Lüftungsnut (23) eine Innenfläche ausbildet, die einen Nutraum in eine schräge Form oder eine Bogenform unterteilt.

5. Luftdämpfer (4) nach den Ansprüchen 1 bis 4, wobei in der jeweiligen Lüftungsnut (23) eine Nut-Bodenfläche (23a), die einen Nutraum unterteilt, eine in etwa rechteckige Form aufweist, und Innenflächen (23b), die von der Nut-Bodenfläche (23a) emporstehen und in Umfangsrichtung einander zugewandt sind, und eine Innenfläche (23c) auf einer Nut-Rückseite in einer schrägen Form ausgebildet sind.

## Revendications

1. Amortisseur pneumatique (4) comprenant:
un piston (2) placé à l'intérieur d'un cylindre (1) de façon mobile vers l'avant et vers l'arrière;
une rainure de logement (20) formée au niveau d'une périphérie du piston (2);
un joint torique (3) inséré dans la rainure de logement (20), et divisant un intérieur du cylindre (1) en une chambre avant et une chambre arrière; et
une rainure de ventilation (23) communicant avec la chambre arrière depuis une face inférieure de rainure (20a) de la rainure de logement (20),
en ce que lorsque le cylindre (1) se déplace vers l'arrière, un flux d'air circulant de la chambre arrière à la chambre avant, accompagné par un mouvement vers l'avant du joint torique (3) à l'intérieur de la rainure de logement (20) est réduit et, lorsque le cylindre (1) se déplace vers l'avant, un flux d'air circulant de la chambre avant à la chambre arrière, accompagné par un mouvement vers l'arrière du joint torique (3) à l'intérieur de la rainure de logement (20) est augmenté par la rainure de ventilation (23),
en ce que la rainure de logement (20) est cloisonnée par la face inférieure de rainure (20a) et des parties rebord avant et arrière (21, 22) se faisant face en intercalant la face inférieure de rainure (20a), et
trois ou plus de trois rainures de ventilation (23) sont formées au niveau de parties divisant la face inférieure de rainure (20a) de la rainure de logement (20) et une périphérie de la partie rebord arrière (22) en parts approximativement égales,
**caractérisé en ce que**
la rainure de ventilation (23) a une dimension en largeur dans un sens périphérique de la rainure de logement (20) telle qu'une largeur (L2) sur un côté supérieur est supérieure à une largeur (L1) sur un côté inférieur.

2. Amortisseur pneumatique (4) comprenant:
un piston (2) placé à l'intérieur d'un cylindre (1) de façon mobile vers l'avant et vers l'arrière;
une rainure de logement (20) formée au niveau d'une périphérie du piston (2);
un joint torique (3) inséré dans la rainure de logement (20), et divisant un intérieur du cylindre (1) en une chambre avant et une chambre arrière; et
une rainure de ventilation (23) communicant avec la chambre avant depuis une face inférieure de rainure (20a) de la rainure de logement (20),
en ce que lorsque le cylindre (1) se déplace vers l'avant, un flux d'air circulant de la chambre avant à la chambre arrière, accompagné par un mouvement vers l'arrière du joint torique (3) à l'intérieur de la rainure de logement (20) est réduit et, lorsque le cylindre (1) se déplace vers l'arrière, un flux d'air circulant de la chambre arrière à la chambre avant, accompagné par un mouvement vers l'avant du joint torique (3) à l'intérieur de la rainure de logement (20) est augmenté par la rainure de ventilation (23),
en ce que la rainure de logement (20) est cloisonnée par la face inférieure de rainure (20a) et des parties rebord avant et arrière (21, 22) se faisant face en intercalant la face inférieure de rainure (20a), et
trois ou plus de trois rainures de ventilation (23) sont formées au niveau de parties divisant la face inférieure de rainure (20a) de la rainure de logement (20) et une périphérie de la partie rebord avant (21) en parts approximativement égales,
**caractérisé en ce que**
la rainure de ventilation (23) a une dimension en largeur dans un sens périphérique de la rainure de logement (20) telle qu'une largeur (L2) sur un côté supérieur est supérieure à une largeur (L1) sur un côté inférieur.

3. Amortisseur pneumatique (4) selon la revendication 1 ou 2, en ce que la rainure de ventilation (23) est creuse avec approximativement une forme de ventilateur dans une coupe transversale dans son sens périphérique de rainure de logement.

4. Amortisseur pneumatique (4) selon l'une des revendications 1 à 3, en ce que la rainure de ventilation (23) forme une face intérieure cloisonnant un espace de rainure en une forme inclinée ou en une forme d'arc.

5. Amortisseur pneumatique (4) selon les revendications 1 à 4, en ce que dans la rainure de ventilation respective (23), une face inférieure de rainure (23a) cloisonnant un espace de rainure a une forme approximativement rectangulaire, et des faces intérieures (23b) verticales par rapport à la face inférieure de rainure (23a) et se faisant face dans le sens périphérique, et une face intérieure (23c) sur un côté arrière de rainure sont réalisées sous une forme inclinée.
